# EUROPÄISCHE PATENTSCHRIFT

(11) **EP 1 427 668 B1**
(45) Veröffentlichungstag und Bekanntmachung des Hinweises auf die Patenterteilung: **11.10.2006**
(21) Anmeldenummer: 03744764.6
(22) Anmeldetag: 24.03.2003
(51) Int. Cl.: C01B 3/48, C01B 3/58, C01B 3/38

(54) **VORRICHTUNG ZUR ERZEUGUNG VON WASSERSTOFF**
DEVICE FOR THE GENERATION OF HYDROGEN
DISPOSITIF DE PRODUCTION D'HYDROGENE

(30) Priorität: 25.03.2002 DE 10213326; 12.07.2002 DE 20211546 U; 02.09.2002 DE 10240953
(43) Veröffentlichungstag der Anmeldung: 16.06.2004
(73) Patentinhaber: Viessmann Werke GmbH & Co KG, 35107 Allendorf (DE); Sued-Chemie AG, 80333 Muenchen (DE)
(72) Erfinder: ZARTENAR, Nicolas, 35091 Coelbe (DE); BRITZ, Peter, 35108 Allendorf (DE); WANNINGER, Klaus, 83059 Kolbermoor (DE)
(74) Vertreter: Wolf, Günter
(86) Internationale Anmeldenummer: PCT/DE2003/000968
(87) Internationale Veröffentlichungsnummer: WO 2003/080505

(56) Entgegenhaltungen:
- EP-A- 0 922 666
- EP-A- 1 094 031
- EP-A- 1 162 679
- WO-A-01/79112
- WO-A-02/47464

## Beschreibung

Die Erfindung betrifft eine Vorrichtung zur Erzeugung von Wasserstoff, mit einer Dampfreformierstufe, mindestens einer Konvertierungsstufe und einer Feinreinigungsstufe.

Derartige Vorrichtungen sind beispielsweise aus der DE 100 57 537 A1 bekannt. Im verbund mit beispielsweise einer Polymermembran- (PEM) -Brennstoffzelle dient sie zur Strom- und Wärmeerzeugung, wobei der in der Reformierstufe aus gasförmigen oder verdampfbaren Kohlenwasserstoffen erhaltene Wasserstoff in der Brennstoffzelle auf bekannte Weise umgesetzt wird. Derartige Anlagen werden sowohl im stationären Bereich als auch mobil (bei Kraftfahrzeugen) eingesetzt.

Der Reformierstufe sind zur Gasreinigung in der Regel mehrere Katalysatorstufen nachgeschaltet, die bei unterschiedlichen Temperaturniveaus die Konzentration des für die Brennstoffzelle schädlichen Kohlenmonoxids verringern. Beispielsweise folgt bei einer bekannten Ausführungsform der Reformierstufe eine sogenannte Hochtemperatur-Konvertierungsstufe (Hochtemperatur-Shift-Stufe; HTS-Stufe), die bei einem Temperaturniveau von etwa 350 bis 400°C für eine erhebliche Reduktion der Kohlenmonoxidkonzentration sorgt. Die Shift-Reaktion ist eine exotherme Gleichgewichtsreaktion, weshalb bei den Temperaturen der Hochtemperatur-Shiftstufe noch eine gewisse Konzentration an Kohlenmonoxid im Gasgemisch vorhanden ist. Eine weitere Verminderung der Kohlenmonoxidkonzentration kann nachfolgend in einer sogenannten Niedertemperatur-Konvertierungsstufe (Niedertemperatur-Shift-Stufe; LTS-Stufe) bei einer Temperatur um 200°C erfolgen. Um den Kohlenmonoxidgehalt auf ein für die Brennstoffzelle geeignetes Maß zu reduzieren, wird üblicherweise noch eine Feinreinigungsstufe nachgeschaltet, in der der restliche Kohlenmonoxidgehalt (a) durch eine selektive Oxidation (SelOx-Stufe) oder (b) eine selektive Methanisierung auf einen Wert von < 100 ppm herabgesetzt wird.

Die in der Hochtemperatur-, Niedertemperatur- und Feinreinigungsstufe eingesetzten Trägerkatalysatoren, zwischen denen zur Einstellung des erforderlichen Temperaturbereichs Wärmetauscher angeordnet sein können, sind bei den bisher verwendeten Gaserzeugungssystemen als vollzylindrische Wabenkörper ausgebildet, die in Längsrichtung vom Reformergas bzw. von den in der Shiftstufe bzw. in der Feinreinigungsstufe erzeugten Gasen durchströmt werden.

Die EP 0 913 357 A1 beschreibt eine Reformiervorrichtung mit einer Katalysatoreinheit, die in der Lage ist, Wasserstoff aus einem Reaktantengemisch, welches eine organische Verbindung oder Kohlenmonoxid enthält, zu erzeugen, sowie mit einer elektrischen Heizvorrichtung. Die Katalysatoreinheit ist als volle Wabenstruktur ausgebildet und kann für die Dampfreformierung, für die partielle Oxidation und Zersetzung und/oder für die Kohlenmonoxid-Shift-Reaktion und/oder für die selektive Oxidation von Kohlenmonoxid verwendet werden.

Die DE 199 21 420 A1 beschreibt einen Primärreformer zum Einsatz bei der Methanol-, Ammoniak- oder Wasserstoffgewinnung unter Einsatz einer Rohrbeheizung. Der Reformer kann als Doppelrohr mit konzentrischer Anordnung von Dampf-/Feedzuführung, Zuführung eines Oxidationsträgers und Abführung des reformierten Synthesegases ausgebildet sein. Es ist lediglich eine einstufiger Primärreformer zur Durchführung von endothermen Reaktionen ohne nachgeschaltete Vorrichtungen zur Durchführung von exothermen Reaktionen beschrieben.

Aus der DE 197 21 630 C1 ist eine Vorrichtung zur Reformierung von Kohlenwasserstoffe enthaltenden Edukten mit einem Retormierreaktor, der zumindest teilweise Metallwabenkörper mit einer Katalysatorbeschichtung enthält, bekannt. Ein Strahlungsbrenner umschließt den aus einem inneren Rohrreaktor und einem diesen in einem Abstand umschließenden Ringspaltreaktor bestehenden zweiteiligen Reformierreaktor, wobei das Rauchgas im Spalt zwischen dem inneren Rohrreaktor und dem Ringspaltreaktor im Gegenstrom zum Eduktgas im Rohrreaktor geführt wird. Es handelt sich hierbei nur um eine einstufige Vorrichtung zur Durchführung einer endothermen Reformierreaktion. Über nachgeschaltete exotherme Stufen finden sich keine Hinweise.

Aus der DE 101 09 983 A1 ist ein Verfahren und eine vorrichtung zur Umsetzung flüssiger, dampfförmiger oder gasförmiger Kohlenwasserstoffe mit Wasser bzw. Wasserdampf oder Luft bzw. Sauerstoff zur Erzeugung eines wasserstoffreichen Synthesegases für den Einsatz in Brennstoffzellen bekannt, wobei die chemische Umsetzung der Edukte an der Oberfläche eines elektrisch beheizbaren Materials erfolgt. Die Umsetzung erfolgt an einem porösen, mit einem Katalysator beschichteten Innerohr. Es handelt sich bei der Umsetzung um eine endotherme Reformierreaktion. Hinweise auf Vorrichtungen zur Durchführung von exothermen Reaktionen finden sich nicht.

Die DE 39 40 700 A1 betrifft einen katalytischen Reaktor mit einem koaxialen Doppelrohraufbau mit einem Reaktionsfluideinlass und einem Reaktionsfluidauslass an dem einen Ende des Reaktors. Das andere, verschlossene Ende des äußeren Reaktors ragt in einen Heizbehälter hinein. Das Reaktionsfluid wird durch einen mit einem Katalysator gefüllten Ringraum geleitet und anschließend durch das innere Rohr abgeleitet. Es handelt sich also um einen einstufigen Reaktor für eine endotherme Reaktion, insbesondere einen Dampfreformierreaktor zur Herstellung von Wasserstoff. Über nachgeschaltete Reaktoren, in denen eine exotherme Reaktion stattfindet, ist nichts angegeben.

Aus der DE 694 20 604 T2 (EP 0 615 949 B1) ist eine Vorrichtung zur Herstellung von Wasserstoff durch Wasserdampf-Reformierung in einem Festbettkatalysator bekannt. Der Wasserstoff wird mit Hilfe einer für Wasserstoff selektiv durchlässigen Trennwand abgetrennt und aufgefangen. Die Vorrichtung enthält einen Außenzylinder, einen Zwischenzylinder und einen Innenzylinder, zwischen denen Ringräume gebildet sind. Im Innenzylinder befindet sich ein Brenner. Die Vorrichtung wird zur Durchführung einer endothermen Reaktion verwendet. Es finden sich keine Hinweise über exotherme Reaktionen.

Aus der DE 198 32 386 A1 ist ein Reformierreaktor, insbesondere zur Wasserdampfreformierung von Methanol in einem Brennstoffzellenfahrzeug bekannt, welches eine Reformerstufe enthält, in welchem eine endotherme Reformierreaktion durchgeführt wird. An die Reformierstufe schließt sich eine CO-Shift-stufe an. Es ist ferner eine katalytische Brennereinheit vorgesehen, die eine mit der Reformerstufe in Wärmekontakt stehenden Heizbereich und einen dem Heizbereich vorgeschalteten, mit der CO-Shiftstufe in wärmekontakt stehenden Kühlbereich mit gegenüber dem Heizbereich geringerer Verbrennungskatalysatoraktivität enthält. Das Brenngas wird im Gegenstrom zu dem die CO-Shiftstufe durchströmenden Reformatoredukts und zu dem die Reformerstufe durchströmenden Ausgangsstoffgemisch durch einen Kühlbereich und den anschließenden Heizbereich hindurchgeleitet. Über die Ausbildung des Katalysators für die CO-Shift-Reaktion finden sich keine Hinweise.

Aus der DE 197 13 242 A1 ist ein Reformierungsreaktor zur Wasserdampfreformierung von Methanol bekannt, der zweistufig mit einer ersten eintrittsseitigen Reaktorstufe und einer an diese in Gasströmungsrichtung direkt anschließenden zweiten austrittsseitigen Reaktorstufe ausgelegt ist, wobei die beiden Reaktorstufen in einem gemeinsamen Reaktorgehäuse untergebracht und mit einer durchgehenden Katalysatorschüttung befüllt sind. Eine der beiden Reaktorstufen wird beheizt, während die andere Reaktorstufe unbeheizt bleibt. Die unbeheizte zweite Stufe kann als Shiftstufe wirken. Zudem kann die Wärme der exothermen Shift-Reaktion die endotherme Methanolreformierung unterstützen. Das Katalysatormaterial liegt in Form einer Schüttung vor.

Die DE 196 24 433 C1 betrifft einen Reformierreaktor, insbesondere zur Wasserdampfreformierung von Methanol, mit drei seriell angeordneten Reaktorstufen, von denen jede mit einer Katalysatorpelletschüttung beladen ist. Die mittlere Reaktorstufe wird durch Beheizung auf einer für die Durchführung der Reformierungsreaktion geeigneten Temperatur gehalten, während die beiden anderen Reaktorstufen unbeheizt bleiben. in der unbeheizten austrittsseitigen Reaktorstufe findet eine Shift-Reaktion statt. Die Katalysatorpellets können durch Abrieb aufgrund von Erschütterungen, wie sie beim Einsatz in Kraftfahrzeugen während des Fahrbetriebs auftreten, beschädigt werden. Weiterhin haben die Katalysatorpellets einen höheren Strömungswiderstand als ein Wabenkörper

Aus der DE 100 57 420 A1 ist ein mehrstufiger Shift-Reaktor zur Reduzierung des Kohlenmonoxidgehalts in einem wasserstoffreichen Gasgemischstrom bekannt, der in Strömungsrichtung hintereinander wenigstens zwei Katalysator-Trägerkörper enthält, welche eine Wabenstruktur mit Kanälen aufweisen. Die Katalysator-Trägerkörper sind als vollzylinder ausgebildet. Beschrieben wird ferner eine Vorrichtung zur partiellen Oxidation eines kohlenwasserstoffhaltigen Gasgemischstromes.

Ferner ist aus der EP 0 922 666 A1 eine Vorrichtung gemäß dem Oberbegriff bekannt. Nicht offenbart ist aber, dass der Ringraum der dampfreformierstufenseitigen Konvertierungsstufe unmittelbar an den Ringraum der Dampfreformierstufe unter Ausbildung eines über alle Stufen durchgehenden Ringraums anschließt. Vielmehr ist zwischen der Dampfreformierstufe und der Konvertierungsstufe eine 180°-Strömungsumlenkung vorgesehen. Die vorgesehenen Ringräume definieren somit keinen über alle Stufen durchgehenden Ringraum.

Wenn die in der Shiftstufe verwendeten Katalysatoren in Form von Vollkörpern vorliegen, hat es sich für die Gasreinigung als problematisch herausgestellt, dass sich aufgrund der exothermen Shift-Reaktion ein radiales Temperaturgefälle von innen nach außen einstellt, das etwa 60 bis 70°C betragen kann. Dies führt dazu, dass die Reinheit des Gases davon abhängt, welcher Querschnittsbereich gerade durchströmt wird. Insbesondere ist der CO-Gehalt des Gasgemisches wegen der Verschiebung des Gleichgewichts in der wärmeren Mitte des Wabenkörpers höher als an der kühleren Peripherie.

Der Erfindung liegt mithin die Aufgabe zugrunde, bei einer Vorrichtung der eingangs genannten Art in konstruktiver Hinsicht auf möglichst einfache Art und Weise dafür zu sorgen, dass das aus der Reformierstufe austretende Gasgemisch (Reformergas) eine möglichst gleichmäßige und vollständige Reinigung (Verminderung des CO-Gehalts) erfährt, und zwar unabhängig davon, welchen (radialen) Bereich der Katalysatorstufe(n) es nach der Reformierung durchströmt.

Diese Aufgabe wird erfindungsgemäß mit einer Vorrichtung gemäß Patentanspruch 1 gelöst.

Vorteilhafte Weiterbildungen ergeben sich aus den abhängigen Patentansprüchen.

In der Dampfreformierstufe (a) findet eine endotherme Reaktion entsprechend der Gleichung 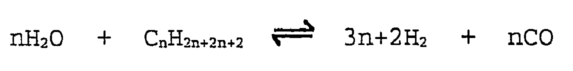 statt. Die Temperatur in der Dampfreformierstufe beträgt im allgemeinen etwa 500 bis 800°C, vorzugsweise etwa 600°C. Der bevorzugte Kohlenwasserstoff ist Methan (n = 1); es können aber auch höhere, noch verdampfbare Kohlenwasserstoffe verwendet werden, die im Benzinbereich (n = 6 bis 8) liegen. Statt der Kohlenwasserstoffe können auch andere organische Verbindungen, wie Methanol verwendet werden. Bei einem Wasserdampfüberschuss wird in der Reformierstufe bereits ein Teil des Kohlenmonoxids in Kohlendioxid umgewandelt. Unter dem Begriff "weitere Reformer-Produkte" versteht man Kohlendioxid und nicht umgesetzte Kohlenwasserstoffe.

In der Stufe zur katalytischen Konvertierung (b) (Shiftstufe) findet folgende exotherme Reaktion statt:

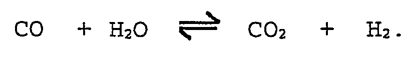

Die Shiftreaktion wird gewöhnlich in eine Hochtemperatur-Shiftstufe bei Temperaturen im Bereich von 230 bis 300°C und in einer getrennten Tieftemperatur-Shiftstufe etwa 250 bis 270°C durchgeführt. Der CO-Gehalt nach der ersten Stufe beträgt etwa 1,5 bis 3,0 Vol.-%, nach der zweiten Stufe etwa 0,3 bis 0,6 Vol.-%. In der Hochtemperatur-Shiftstufe können folgende Katalysatoren verwendet werden: Fe₂O₃/Cr₂O₃, CuO/Cr₂O₃, CuO/ZnO (Cr₂O₃), Pt auf den Oxiden vierwertiger Metalle (TiO₂, ZrO₂). Als Katalysatoren in der Tieftemperatur-Shiftstufe können verwendet werden: Pt auf TiO₂ und/oder ZrO₂ und/oder CrO₂ (allgemein vierwertige Metalle) und/oder CuO/ZnO.

Das Molverhältnis H₂O/C-Anteil am Eingang der Reformierstufe beträgt etwa 3 bis 4:1, insbesondere 2,8 bis 4:1. Unterhalb eines Verhältnisses von 2,8:1 findet im allgemeinen eine Verkokung statt. Ein Dampfüberschuss ist auch wegen der Gleichgewichtseinstellung erforderlich. Die Hochtemperatur- und Tieftemperatur-Shiftstufe können auch in einer Stufe vereinigt werden.

Da das Gasgemisch am Ausgang der Tieftemperatur-Shiftstufe noch etwas Kohlenmonoxid enthält, wird eine Feinreinigungsstufe (c) nachgeschaltet. Die Feinreinigung kann nach zwei Methoden erfolgen:
1.) selektive Oxidation des CO im Wasserstoffstrom (SelOx-Stufe) mit einem Pt- oder Ru-Katalystator, wobei nur sehr wenig Luft zugesetzt wird, nach der Reaktionsgleichung:

   2CO + O₂ → 2CO₂
2.) Selektive Methanisierung des CO, nach der Reaktionsgleichung:

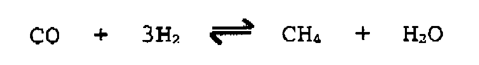

Nach beiden Reaktionen, die exotherm sind, wird der Kohlenmonoxidgehalt im allgemeinen auf < 100 ppm herabgesetzt. Die Temperatur in der Feinreinigungsstufe (c) beträgt etwa 200 bis 250°C.

Das bei der Reaktion (2) gebildete Methan stört beim Einsatz in einer Brennstoffzelle nicht. Der CH₄-Gehalt beträgt einschließlich des in der Reformierstufe nicht umgesetzten Methans etwa 1 bis 4 Vol.-%.

In der nachfolgenden Beschreibung werden, soweit passend, die Shiftstufe(n) und die Feinreinigungsstufe kurz als "Katalysatorstufen" bezeichnet.

Die in den einzelnen Stufen verwendeten Hohlkörper sind vorzugsweise Hohlzylinder. Es können aber auch Hohlkörper mit beispielsweise dreieckigen, rechteckigen oder mehreckigen Hohlquerschnitten verwendet werden.

Dadurch, dass die der Reformierstufe nachgeschalteten Katalysatorstufen bevorzugt als Hohlzylinder mit einem Ringraum ausgebildet sind, bildet sich über dem Durchströmungsquerschnitt der einzelnen Katalysatorstufen in jeder Stufe ein im wesentlichen isothermes, radiales Temperaturprofil aus, da bei gleicher Strömungsquerschnittsfläche, verglichen mit der eines vollzylindrischen Katalysatorkörpers, der Abstand zwischen den Randbereichen deutlich geringer ausfällt.

Die Temperaturverteilung in den hohlzylindrischen Katalysatorstufen ist in radialer Richtung günstiger, d.h. der Temperaturgradient ist wesentlich kleiner als bei herkömmlichen Vollzylinderwaben. Da für den Betrieb der Brennstoffzelle in den Katalysatorstufen ferner nur geringe Temperaturfenster zugelassen werden können, da anderenfalls der Kohlenmonoxidanteil zu stark ansteigen würde, ist diese Katalysatorkonfiguration besonders gut geeignet.

Ein weiterer vorteil der erfindungsgemäßen Vorrichtung besteht darin, dass die Hohlzylinder der aufeinanderfolgenden Stufen unmittelbar aneinander angrenzen, so dass keine gesonderten Zu- und Ableitungen sowie Umlenkeinrichtungen zwischen den einzelnen Stufen erforderlich sind.

Als Heizvorrichtung in der Dampfreformierstufe wird vorzugsweise ein Brenner verwendet, der zweckmäßig zentral im Hohlzylinder der Reformierstufe angeordnet ist.

Vorzugsweise beträgt die Querschnittsdicke des hohlzylindrischen Katalysatorkörpers etwa 2 bis 20 % des Außendurchmessers des Hohlzylinders.

Der Katalysator in mindestens einem der Ringräume der einzelnen Stufen ist vorzugsweise in einer Wabenstruktur angeordnet. Hierbei können z.B. keramische Waben verwendet werden, Vorzugsweise sind die Katalysatoren jedoch auf einer Strömungskanäle begrenzenden (korrugierten) Metallfolie angeordnet.

Zur weiteren Vergleichmäßigung des radialen Temperaturprofils der hohlzylindrischen Katalysatorstufen und zur verbesserung des Stoffaustausches innerhalb der Hohlzylinder sind in der die Strömungskanäle begrenzenden Metallfolie zwischen den einzelnen Strömungskanälen vorzugsweise Perforationen vorgesehen. Dies bewirkt, dass die Gasgemische in den einzelnen Katalysatorstufen nicht nur axial, sondern zum Temperaturausgleich auch in gewissen Grenzen quer durch die Katalysatorstufen strömen können. Die Perforationen bewirken eine Erhöhung der Turbulenz, so dass die Gasgemische im Innenbereich des Hohlzylinders mit den Gasgemischen in dessen Außenbereich, die eine etwas andere Zusammensetzung haben, gut durchgemischt werden.

Die Hauptströmungsrichtung des Wasserstoffs und der Reformer-Produkte innerhalb des Hohlkörpers ist vorzugsweise im wesentlichen parallel zu dessen Achse orientiert.

Eine besonders bevorzugte Ausführungsform besteht ferner darin, dass im Inneren des (der) Hohlkörper(s) der Katalysatorstufe(n) mindestens ein Strömungskanal vorgesehen ist, der vorzugsweise einen Ringraum darstellt. Dieser Strömungskanal dient dabei zur Zufuhr und Vorwärmung der die zur Reformierung erforderlichen Kohlenwasserstoffe entgegen der Strömungsrichtung der aus der (den) Katalysatorstufe(n) kommenden gasförmigen Produkte. Durch diesen Wärmeaustausch mit dem Kohlenwasserstoff wird die in der (den) weiteren Katalysatorstufe(n) entstehende exotherme Wärme gleichmäßig abgeführt, so dass das Temperaturgefälle auch in der axialen Richtung geringer wird. Der Strömungskanal kann auch einen Ringraum darstellen.

Vorzugsweise ist zumindest zwischen der (den) Konvertierungsstufe(n) und der Dampfreformierstufe und gegebenenfalls auch zwischen der letzten Konvertierungsstufe und der Feinreinigungsstufe ein indirekter Wärmeaustauscher vorgesehen, durch den das für die Dampfreformierung erforderliche Wasser im Gegenstrom zu den aus der (den) Konvertierungsstufe(n) und gegebenenfalls auch aus der Feinreinigungsstufe kommenden gasförmigen Produkte geführt ist.

Die erfindungsgemäße vorrichtung, einschließlich einiger vorteilhafter Weiterbildungen wird nachfolgend anhand der zeichnerischen Darstellung eines Ausführungsbeispiels näher erläutert.

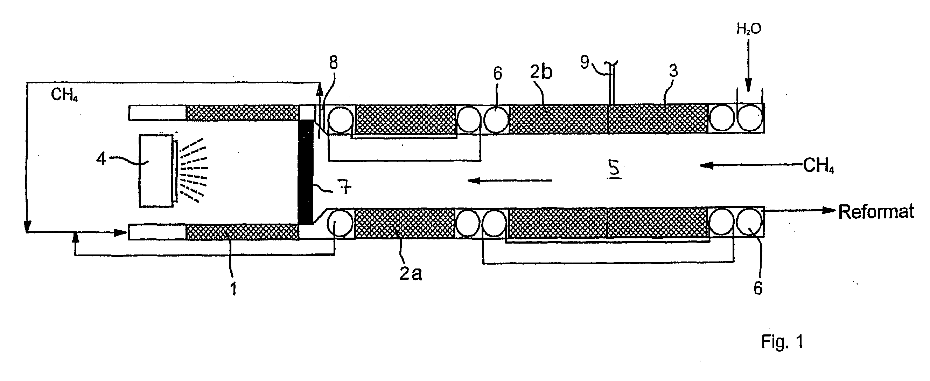

In Figur 1 ist die erfindungsgemäße Vorrichtung im Schnitt (ohne umlaufende Kanten) als Prinzipskizze dargestellt. Diese umfasst eine Reformierstufe 1 zur Umsetzung der gasförmigen bzw. verdampfbaren Kohlenwasserstoffe (insbesondere Methan) mit Wasserdampf zu Wasserstoff, Kohlenmonoxid und weiteren Reformer-Produkten (Reformat), wobei die Reformierstufe bei dieser bevorzugten Ausführungsform in Form eines Hohlzylinders ausgebildet und darin ein Reformer-Brenner 4, (beispielsweise ein Gasflächenbrenner) zentrisch angeordnet ist (Wärmeentwicklung gestrichelt angedeutet). Zur chemischen Aufbereitung, d. h. zur Verminderung des Kohlenmonoxidgehalts der Reformer-Produkte, sind der Reformierstufe 1 drei Katalysatorstufen nachgeschaltet, wobei die Katalysatorstufe 2a eine Hochtemperatur-Shiftstufe (HTS-Stufe), die Stufe 2b eine Tieftemperatur - Shiftstufe (LTS-Stufe) und die Stufe 3 eine Gasreinigungsstufe (entweder eine SelOx- oder Methanisierungsstufe) darstellt.

Bei Verwendung einer SelOx-Stufe, bei der das restliche Kohlenmonoxid unter Luftzufuhr selektiv oxidiert wird, ist vorzugsweise vorgesehen, dass diese mit einer gleichmäßig über den Umfang des Ringraums verteilt angeordneten Luftzuführung 9 (schematisch dargestellt) versehen ist, wobei diese besonders bevorzugt als Ringleitung mit verteilt angeordneten Austrittsdüsen ausgebildet ist.

Im Hohlraum der hohlzylinderförmigen Katalysatorstufen 2a, 2b, 3 ist ein Strömungskanal 5 vorgesehen. Durch den Strömungskanal 5 werden die gasförmigen bzw. verdampfbaren Kohlenwasserstoffe in Pfeilrichtung zur Vorwärmung entgegen der Strömungsrichtung der Reformer-Produkte geführt, d.h. die an den Katalysatorstufen 2a, 2b und 3 bei den exothermen Reaktionen anfallende Wärme wird direkt dazu verwendet, um die Reformeredukte zu erwärmen. Die Ausgestaltung des Strömungskanals 5 als Ringkanal (nicht dargestellt) hat den Vorteil, dass die Kohlenwasserstoffe gleichmäßiger erwärmt werden.

Zur Trennung des hohlzylindrischen Reformerraums vom Strömungskanal 5 ist eine Trennwand 7 vorgesehen, d.h. das Kohlenwasserstoffgas tritt über den schematisch dargestellten Anschluss 8 in die Reformierstufe 1 ein.

Um schließlich auch das für die Reformierreaktion erforderliche Wasser vorzuheizen, sind zwischen den Stufen 1 und 2a, zwischen den Stufen 2a und 2b und am Ende der Stufe 3 Wärmetauscher 6 (beispielsweise Wendelrohrwärmetauscher) vorgesehen, die einerseits vom Prozesswasser durchströmt werden und die andererseits thermisch mit dem Strömungskanal 5 in Verbindung stehen. Ein weiterer Wärmeaustauscher kann zwischen den Stufen 2b und 3 vorgesehen sein.

Durch die bisher beschriebenen Ausgestaltungen ist das Problem der radial ungleichmäßigen Temperaturverteilung im wesentlichen gelöst. Als problematisch hat sich aber darüberhinaus noch herausgestellt, dass innerhalb der Konvertierungsstufe(n) sowie in der Feinreinigungsstufe in axialer Richtung aufgrund der exothermen Shift-Reaktion bzw. bei der selektiven Oxidation oder Methanisierungsreaktion ebenfalls eine Verungleichmäßigung des Temperaturprofils und damit eine Verschlechterung der Gasqualität resultiert. Um dieses Problem zu lösen, wird deshalb vorgeschlagen ein die Konvertierungsstufe(n) von außen umschließendes Strömungsführungsgehäuse für ein Kühlmedium zur Kühlung der Konvertierungsstufe(n) vorzusehen, wobei das Kühlmedium vorzugsweise Wasser oder einen Kohlenwasserstoff darstellt, die in Dampfform der Dampfreformierungsstufe zuführbar sind. Die Verwendung eines Strömungszuführungsgehäuses ist nicht auf die vorstehend beschriebene, erfindungsgemäße Vorrichtung beschränkt, sondern kann auch in bekannten Vorrichtungen, bei denen die Katalysatorstufe(n) als Vollkörper ausgebildet sind, verwendet werden, um den axialen Temperaturgradienten zu minimieren.

Durch das Kühlmedium wird die bei der Umwandlung von Kohlenmonoxid in Kohlendioxid entstehende Wärme abgeführt. Wie später noch ausführlich beschrieben wird, bilden also einerseits die Oberfläche des Wabenkörpers auf der (den) Shiftstufe(n) (bzw. eine entsprechende Ummantelung) und andererseits die Wand des Strömungsführungsgehäuses die Flankierungen des Kanals für das Kühlmedium, der gleichzeitig noch den Vorteil mit sich bringt, dass die in der (den) Shiftstufe(n) anfallende Wärme gezielt abgeführt werden kann und nicht nutzlos an die Umgebung abgegeben wird. Aufgrund der Außenmantelkühlung ergibt sich eine erhebliche Vergleichmäßigung des axialen Temperaturprofils, d.h. durch die Kombination aus Außenmantelkühlung und Ausbildung des Katalysators als Hohlzylinder wird an jeder Stelle der Shiftstufe(n) ein konstantes Verhältnis zwischen Kohlenmonoxid und Kohlendioxid erhalten.

Vorzugsweise weist das Strömungszuführungsgehäuse Zu- und Abfuhranschlüsse für das Kühlmedium auf und ist wahlweise im Gleich- oder Gegenstrom zur Durchströmungsrichtung innerhalb der Konvertierungsstufe(n) ausgebildet. Ist dabei auf der Eintrittsseite der ersten Shiftstufe mit einer starken Wärmeentwicklung zu rechnen, begünstigt ein Gleichstrombetrieb aufgrund des größeren thermodynamischen Temperaturabstandes der beteiligten Medien die Kühlwirkung und somit einen Betrieb in Richtung einer gleichmäßigen axialen Temperaturverteilung in der Shiftstufe. Entsprechendes gilt für den umgekehrten Fall des Gegenstroms.

Ferner kann wahlweise zum Vorheizen des der Reformierstufe zugeführten Wassers und/oder der Kohlenwasserstoffe dieses bzw. diese als Kühlmedium dem Strömungsführungsgehäuse zugeführt werden, wozu das Strömungsführungsgehäuse vorzugsweise abfuhranschlussseitig hydraulisch mit dem Edukteingang der Reformierstufe verbunden ist.

Ferner kann wahlweise an den Zu- und/oder Abführanschlüssen des Strömungsführungsgehäuses ein Regelventil zur Massenstromeinstellung des Kühlmediums vorgesehen sein. Zusammen mit einem nach der (den) Katalysatorstufe(n) im Strömungsweg des Wasserstoffs und der übrigen Reformer-Produkte angeordneten Temperatursensor und einer übergeordneten Regeleinrichtung ist eine an der Austrittstemperatur des aus der Katalysatorstufe kommenden Gemisches orientierten Wasserstromeinstellung des Kühlmediums möglich, das wie gesagt, auch aus den Reformer-Edukten gebildet sein kann.

Die zuletzt erläuterte Ausführungsform ist nachfolgend anhand der zeichnerischen Darstellung eines Ausführungsbeispiels näher erläutert. Es zeigen:
Figur 2 im Schnitt eine erfindungsgemäße Ausführungsform mit einem Strömungsgehäuse zur Außenmantelkühlung der Shiftstufe.
Figur 3 einen Schnitt durch die Vorrichtung gemäß Figur 2 entlang der Linie A - A.

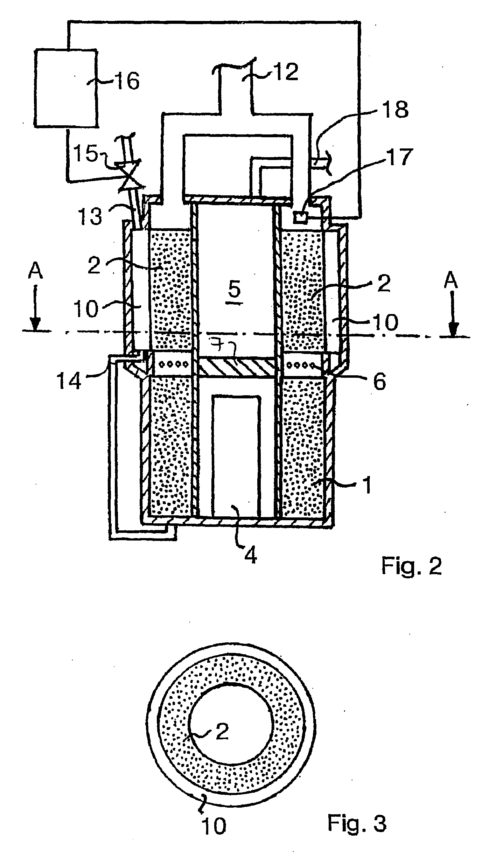

Figur 2 zeigt die erfindungsgemäße Ausführungsform im Längsschnitt. Diese Vorrichtung enthält eine Reformierstufe 1, die als hohlzylindrischer Körper ausgebildet ist, in dessen freiem zentrum ein Gasbrenner 4 zur Erzeugung der für die Reformierung erforderlichen Wärme angeordnet ist. Der Reformierstufe 1 ist eine hohlzylindrisch ausgebildete Konvertierungsstufe 2 (einstufig) sowie eine (nicht dargestellte) Feinreinigungsstufe nachgeschaltet. Die Wasserstofferzeugung geschieht nach folgenden Schritten. Zunächst werden der Reformierstufe 1. Kohlenwasserstoff und Wasserdampf zugeführt und dort mit Hilfe der Wärme des Gasbrenners 4 (Temperatur etwa 800°C) in Wasserstoff, Kohlenmonoxid (und etwas Kohlendioxid) umgewandelt. Am Ausgang der Reformierstufe 1 wird das Produktgas mit Hilfe des Wärmetauschers 6 auf eine für die katalytische Shift-Reaktion zur Reduzierung des Kohlenmonoxidanteils geeignete Temperatur abgekühlt. In der Shiftstufe 2 erfolgt anschließend die Umwandlung des Kohlenmonoxids in Kohlendioxid bei einer Temperatur im Bereich von etwa 250 bis 300°C. Nach der Shiftstufe 2, der wie erwähnt, eine weitere Feinreinigungsstufe nachgeschaltet ist, gelangt das praktisch kohlenmonoxid-freie Gas über die Produktgasleitung 12 zur Brennstoffzelle (nicht dargestellt).

Zur Vergleichmäßigung des axialen Temperaturprofils innerhalb der Shiftstufe 2 ist ein diese von außen umschließendes Strömungsführungsgehäuse 10 für ein Kühlmedium vorgesehen. Wie insbesondere aus Figur 3 ersichtlich, ist das Strömungsführungsgehäuse 10 gewissermaßen als ein die Katalysatorstufe 2 umschließender, zylindrischer Mantel ausgebildet, der einen vom Kühlmedium durchströmten, konzentrischen Ringspalt begrenzt. Selbstverständlich sind aber auch andere Gestaltungen des Gehäuse realisierbar. Wesentlich ist, dass eine ausreichende Wärmeabfuhr von der äußeren Peripherie der Katalysatorstufe 2 gewährleistet ist. Hierbei ist beispielsweise sogar eine die Katalysatorstufe 2 umschließende Rohrwendel geeignet, die allgemein ausgedrückt, auch nichts anderes als das Strömungsführungsgehäuse 10 ist. Weiterhin ist in Figur 2 dargestellt, dass das Strömungsführungsgehäuse 10 Zu- 13 und Abfuhranschlüsse 14 für das Kühlmedium aufweist und vom Kühlmittel im Gegenstrom zur Durchströmungsrichtung innerhalb der Katalysatorstufe 2 durchströmbar ausgebildet ist. Als Kühlmedium wird dabei vorzugsweise das für den Reformerprozess ohnehin erforderliche Wasser verwendet, das durch das erfindungsgemäße Strömungstührungsgehäuse 10 vorteilhaft leicht vorgeheizt zum Eingang der Reformierstufe 1 gelangt. Bei Bedarf kann aber auch das für den Reformierprozess erforderliche Kohlenwasserstoffgas zusammen mit dem Wasser über den Zufuhranschluss 13 dem Strömungsführungsgehäuse 10 zugeführt und dort vorgeheizt werden.

Zur Massenstromeinstellung des Kühlmediums ist bei dem dargestellten Ausführungsbeispiel vorzugsweise am Zufuhranschluss 13 ein Regelventil 15 vorgesehen, das in eine Leitung mit einer übergeordneten Regeleinrichtung 16 in Verbindung steht. Gleichzeitig ist vorzugsweise nach der Katalysatorstufe 2 im Strömungsweg des Wasserstoffs der übrigen Reformer-Produkte ein Temperatursensor 17 angeordnet, der seinerseits zur Massenstromeinstellung des Kühlmediums über die übergeordnete Regeleinrichtung 16 mit dem Regelventil 15 verbunden ist. Auf diese Weise kann also in Abhängigkeit von der Produktgas-Austrittstemperatur die Kühlleistung an der Mantelfläche der Katalysatorstufe 2 in gewissen Grenzen variiert werden.

Schließlich ist vorzugsweise im Inneren der hohlzylindrisch ausgebildeten Katalysatorstufe 2 ein weiterer Kühlmittelkanal 5 angeordnet, der vorzugsweise und wahlweise von Wasser und/oder vom Kohlenwasserstoffgas durchströmbar ist. Die zufuhr des Kühlmediums erfolgt dabei über die Anschlussleitung 18. Die Abfuhrleitung ist, da ohne weiteres vorstellbar, nicht dargestellt.

## Patentansprüche

1. Vorrichtung zur Erzeugung von Wasserstoff, enthaltend
a. eine beheizte Dampfreformierstufe (1) mit einem Reformierkatalysator zur Umwandlung von gasförmigen oder verdampfbaren Kohlenwasserstoffen und Wasser in Wasserstoff, Kohlenmonoxid und weitere Reformer-Produkte, wobei die Dampfreformierstufe (1) als Hohlkörper, vorzugsweise als Hohlzylinder, mit einem als Ringraum ausgebildeten Mantelraum zur Aufnahme des Reformierkatalysators ausgebildet ist und eine Heizvorrichtung (4) im Mantelraum angeordnet ist;
b. mindestens eine der Dampfreformierstufe (1) nachgeschaltete Stufe (2a, 2b) zur katalytischen Konvertierung des aus der Dampfreformierstufe austretenden Gemisches aus Wasserstoff, Kohlenmonoxid und überschüssigem Wasserdampf (Shift-Stufe), wobei die Konvertierungsstufe(n) (2a, 2b) als Hohlkörper mit einem Ringraum zur Aufnahme der entsprechenden Katalysatoren ausgebildet sind; und
c. eine der (den) Konvertierungsstufe(n) (2a, 2b) nachgeschaltete Feinreinigungsstufe (3) zur katalytischen Verminderung des Rest-Kohlenmonoxidgehalts der Konvertierungsprodukte, wobei die Feinreinigungsstufe (3) als Hohlkörper mit einem Ringraum zur Aufnahme des entsprechenden Katalysators ausgebildet ist,
**dadurch gekennzeichnet,**
**dass** der Ringraum der Dampfreformierstufe (1), der Konvertierungsstufen (2) und der Feinreinigungsstufe (3) unmittelbar unter Ausbildung eines über alle Stufen (1,2,3) durchgehenden Ringraums aneinander anschleißt, so dass keine geänderten Zu- und Ableitungen sowie Umlenkeinrichtungen zwischen den einzelnen Stufen erforderlich sind.

2. Vorrichtung nach Anspruch 1,
**dadurch gekennzeichnet,**
**dass** die Heizvorrichtung (4) als Brenner ausgebildet ist.

3. vorrichtung nach Anspruch 1 oder 2,
**dadurch gekennzeichnet,**
**dass** die Querschnittsdicke des durchgehenden Ringraumes etwa 2 bis 20 % des Außendurchmessers des Hohlkörpers beträgt.

4. Vorrichtung nach einem der Ansprüche 1 bis 3,
**dadurch gekennzeichnet,**
**dass** der Katalysator in mindestens einem der Ringräume in einer Wabenstruktur, vorzugsweise auf einer Strömungskanäle begrenzenden Metallfolie angeordnet ist.

5. vorrichtung nach Anspruch 4,
**dadurch gekennzeichnet,**
**dass** zur Verbesserung des Stoffaustausches zwischen den Strömungskanälen Perforationen vorgesehen sind.

6. Vorrichtung nach einem der Ansprüche 1 bis 4,
**dadurch gekennzeichnet,**
**dass** die Hauptströmungsrichtung des Wasserstoffs und der Reformer-Produkte innerhalb des Hohlkörpers im wesentlichen parallel zu dessen Achse orientiert ist.

7. Vorrichtung nach einem der Ansprüche 1 bis 6,
**dadurch gekennzeichnet,**
**dass** im Inneren des(der) Hohlkörper (s) mindestens ein Strömungskanal (5) vorgehen ist.

8. Vorrichtung nach Anspruch 7,
**dadurch gekennzeichnet,**
**dass** der Strömungskanal (5) einen Ringraum darstellt.

9. Vorrichtung nach Anspruch 7 oder 8,
**dadurch gekennzeichnet,**
**dass** der Strömungskanal (5) zur Zufuhr und vorwärmung der Kohlenwasserstoffe entgegen der Strömungsrichtung der aus der (den) Konvertierungsstufe(n) (2a, 2b) und der Feinreinigungsstufe (3) kommenden gasförmigen Produkte ausgebildet ist.

10. Vorrichtung nach einem der Ansprüche 1 bis 9,
**dadurch gekennzeichnet,**
**dass** zumindest zwischen der (den) Konvertierungsstufe(n) (2a, 2b) und der Dampfreformierstufe und gegebenenfalls auch zwischen der Konvertierungsstufe (2b) und der Feinreinigungsstufe (3) ein indirekter Wärmeaustauscher vorgesehen ist, durch den (die) das für die Dampfreformierung erforderliche Wasser im Gegenstrom zu den aus der (den) Konvertierungsstufe(n) (2a, 2b) und gegebenenfalls auch aus der Feinreinigungsstufe (3) kommenden gasförmigen Produkte geführt ist.

11. vorrichtung nach einem der Ansprüche 1 bis 9,
**dadurch gekennzeichnet,**
**dass** die Feinreinigungsstufe (3) wahlweise als selektive Oxidationsstufe oder als Methanisierungsstufe ausgebildet ist.

12. Vorrichtung nach Anspruch 11,
**dadurch gekennzeichnet,**
**dass** die selektive Oxidationsstufe mit einer gleichmäßig über den Umfang des Ringraumes der Feinreinigungsstufe (3) angeordneten Luftzuführung (9) versehen ist.

13. Vorrichtung nach Anspruch 12,
**dadurch gekennzeichnet,**
**dass** die Luftzuführung (9) als Ringleitung mit verteilt angeordneten Austrittsdüsen ausgebildet ist.

14. Vorrichtung, insbesondere nach einem der Ansprüche 1 bis 13,
**gekennzeichnet durch**
eine die Konvertierungsstufe (n) (2a, 2b) von außen umschließende Strömungsführungsgehäuse (10) für ein Kühlmedium zur Kühlung der Konvertierungsstufe (n) (2a, 2b), wobei das Kühlmedium vorzugsweise Wasser oder Kohlenwasserstoffe darstellen, die in Dampfform der Dampfreformierungsstufe (3) zuführbar sind.

15. Vorrichtung nach Anspruch 14,
**dadurch gekennzeichnet,**
**dass** das Strömungszuführungsgehäuse (10) Zu- (13) und Abfuhranschlüsse (14) für das Kühlmedium aufweist und wahlweise im Gleich- oder Gegenstrom zur Durchströmungsrichtung innerhalb der Konvertierungsstufe(n) (2a, 2b) durchströmbar aufgebildet ist.

16. Vorrichtung nach Anspruch 14 oder 15,
**dadurch gekennzeichnet,**
**dass** das Strömungsführungsgehäuse (10) abführanschlussseitig hydraulisch mit der Reformierstufe (1) edukteingangsseitig verbunden ist.

17. Vorrichtung nach einem der Ansprüche 14 bis 16,
**dadurch gekennzeichnet,**
**dass** wahlweise an den Zu-(13) und/oder Abführanschlüssen (14) des Strömungsführungsgehäuses (10) ein Regelventil (15) zur Massestromeinstellung des Kühlmediums vorgesehen ist.

18. Vorrichtung nach einem der Ansprüche 1 bis 17,
**dadurch gekennzeichnet,**
**dass** am stromabwärtigen Ende des Ringraums der Konvertierungsstufe(n) (2a, 2b) (ein) Temperatursensor(en) (17) angeordnet ist(sind), der(die) zur Massenstromeinstellung des Kühlmediums über eine übergeordnete Regeleinrichtung (16) mit dem Regelventil (15) verbunden ist.

19. Vorrichtung nach einem der Ansprüche 1 bis 18,
**dadurch gekennzeichnet,**
**dass** im Inneren der hohlzylindrisch ausgebildeten Konvertierungsstufe(n) (2a, 2b) ein weiterer Kühlmediumkanal (16) angeordnet ist, der vorzugs- und wahlweise von Wasser und/ oder von den Kohlenwasserstoffen durchströmbar ist.

## Claims

1. A device for generating hydrogen, comprising
a. a heated steam-reforming stage (1) having a reformer catalyst for conversion of gaseous or vaporizable hydrocarbons and water into hydrogen, carbon monoxide and additional reformer products, whereby the steam-reforming stage (1) is designed as a hollow body, preferably a hollow cylinder, having a jacketed space designed as an annular space to accommodate the reformer catalyst, and a heating device (4) being arranged in the jacket;
b. at least one stage (2a, 2b) downstream from the steam-reforming stage (1), designed for catalytic conversion of the mixture of hydrogen, carbon monoxide and excess steam emerging from the steam-reforming stage (shift stage), the conversion stage(s) (2a, 2b) being designed as hollow bodies having an annular space to accommodate the corresponding catalysts; and
c. a fine purification stage (3) downstream from the conversion stage(s) (2a, 2b) is designed for catalytic reduction of the residual carbon monoxide content of the conversion products, whereby the fine purification stage (3) is designed as a hollow body having an annular space to accommodate the corresponding catalyst,
**characterized in that**
the annular space of steam-reforming stage (1), of the conversion stage(s) (2) and of the fine purification stage (3) are connected directly to one another, forming a continuous annular space over all the stages (1, 2, 3), so that no separate inlet and outlet lines or deflecting devices are necessary between the individual stages.

2. The device according to claim 1,
**characterized in that**
the heating device (4) is designed as a burner.

3. The device according to claim 1 or 2,
**characterized in that**
the cross-sectional thickness of the continuous annular space amounts to approximately 2% to 20% of the outside diameter of the hollow body.

4. The device according to any one of claims 1 through 3,
**characterized in that**
the catalyst is arranged in a honeycomb structure, preferably on a metal foil bordering one of the flow channels in at least one of the annular spaces.

5. The device according to claim 4,
**characterized in that**
perforations are provided to improve the mass exchange between the flow channels.

6. The device according to any one of claims 1 through 4,
**characterized in that**
the main direction of flow of the hydrogen and the reformer products within the hollow body is oriented essentially in parallel with its axis.

7. The device according to any one of claims 1 through 6,
**characterized in that**
at least one flow channel (5) is provided in the interior of the hollow body (bodies).

8. The device according to claim 7,
**characterized in that**
the flow channel (5) is an annular space.

9. The device according to claim 7 or 8,
**characterized in that**
the flow channel (5) is designed for supplying and preheating the hydrocarbons in countercurrent with the direction of flow of the gaseous products coming from the conversion stage(s) (2a, 2b) and the fine purification stage (3).

10. The device according to any one of claims 1 through 9,
**characterized in that**
an indirect heat exchanger is provided at least between the conversion stage(s) (2a, 2b) and the steam-reforming stage and optionally also between the conversion stage (2b) and the fine purification stage (3), the water required for the steam reforming being carried through this heat exchanger in countercurrent with the gaseous products coming out of the conversion stage(s) (2a, 2b) and optionally also from the fine purification stage (3).

11. The device according to any one of claims 1 through 9,
**characterized in that**
the fine purification stage (3) is optionally designed as a selective oxidation stage or as a methanization stage.

12. The device according to claim 11,
**characterized in that**
the selective oxidation stage is provided with an air supply (9) arranged uniformly over the circumference of the annular space of the fine purification stage (3).

13. The device according to claim 12,
**characterized in that**
the air supply (9) is designed as a ring line having outlet nozzles arranged distributed around it.

14. The device, in particular according to any one of claims 1 through 13,
**characterized by**
a flow guidance housing (10) surrounding the conversion stage(s) (2a, 2b) on the outside for carrying a coolant medium for cooling the conversion stage(s) (2a, 2b), the coolant medium preferably being water or hydrocarbons which can be supplied in vapor form to the steam-reforming stage (3).

15. The device according to claim 14,
**characterized in that**
the flow guidance housing (10) has inlet connections (13) and outlet connections (14) for the coolant medium and is designed to allow flow to pass through it optionally in cocurrent or countercurrent with the direction of flow within the conversion stage(s) (2a, 2b).

16. The device according to claim 14 or 15,
**characterized in that**
the flow guidance housing (10) is hydraulically connected at the outlet connection end to the educt inlet of the reforming stage (1).

17. The device according to any one of claims 14 through 16,
**characterized in that**
a regulating valve (15) for adjusting the flow rate of the coolant medium is optionally provided on the inlet connections (13) and/or outlet connections (14) of the flow guidance housing (10).

18. The device according to any one of claims 1 through 17,
**characterized in that**
(a) temperature sensor(s) (17) is (are) arranged on the downstream end of the annular space of the conversion stage(s) (2a, 2b), said temperature sensor(s) being connected to the regulating valve (15) via a higher-level regulating device (16) for the flow rate adjustment of the coolant medium.

19. The device according to any one of claims 1 through 18,
**characterized in that**
another coolant medium channel (16) is arranged in the interior of the conversion stage(s) (2a, 2b) designed as a hollow cylinder, with water and/or hydrocarbons preferably and optionally flowing through said coolant medium channel.

## Revendications

1. Dispositif de génération d'hydrogène, comprenant
a. un étage de reformage à la vapeur chauffé (1) comportant un catalyseur de reformage pour la conversion d'hydrocarbures gazeux ou vaporisables et d'eau en hydrogène, monoxyde de carbone et autres produits de reformage, l'étage de reformage à la vapeur (1) se présentant sous la forme d'un corps creux, de préférence d'un cylindre creux, un espace d'enveloppe réalisé sous forme d'un espace annulaire et destiné à recevoir le catalyseur de reformage et un dispositif de chauffage (4) étant disposé dans l'espace d'enveloppe ;
b. au moins un étage (2a, 2b) installé en aval de l'étage de reformage à la vapeur (1) pour la conversion catalytique du mélange sortant de l'étage de reformage à la vapeur et formé d'hydrogène, de monoxyde de carbone et de vapeur d'eau excédentaire (étage de transformation), l'étage(les étages) de conversion (2a, 2b) étant réalisés sous forme de corps creux avec un espace annulaire destiné à recevoir les catalyseurs correspondants ; et
c. un étage de purification à fond (3) installé en aval de l'étage(des étages) de conversion (2a, 2b) pour réduire par catalyse la teneur résiduelle en monoxyde de carbone des produits de conversion, l'étage de purification à fond (3) étant réalisé sous forme d'un corps creux à espace annulaire destiné à recevoir le catalyseur correspondant,
**caractérisé en ce que,**
l'espace annulaire de l'étage de reformage à la vapeur (1), l'étage de conversion (2) et l'étage de purification à fond (3) se raccordent directement en formant un espace annulaire continu sur tous les étages (1, 2, 3), de sorte qu'on n'a pas besoin de conduites d'alimentation et d'évacuation séparées ni de dispositifs d'inversion entre les différents étages.

2. Dispositif selon la revendication 1,
**caractérisé en ce que**,
le dispositif de chauffage (4) est réalisé sous forme d'un brûleur.

3. Dispositif selon la revendication 1 ou 2,
**caractérisé en ce que,**
l'épaisseur de section transversale de l'espace annulaire continu représente environ 2 à 20 % du diamètre extérieur du corps creux.

4. Dispositif selon l'une quelconque des revendications 1 à 3,
**caractérisé en ce que,**
le catalyseur est disposé dans au moins un des espaces annulaires dans une structure en nid d'abeille, de préférence sur un film métallique délimitant des canaux d'écoulement.

5. Dispositif selon la revendication 4,
**caractérisé en ce que,**
pour améliorer l'échange de matière entre les canaux d'écoulement, il est prévu des perforations.

6. Dispositif selon l'une quelconque des revendications 1 à 4,
**caractérisé en ce que,**
le sens principal d'écoulement de l'hydrogène et des produits de reformage à l'intérieur du corps creux est orienté sensiblement à la parallèle de son axe.

7. Dispositif selon l'une quelconque des revendications 1 à 6,
**caractérisé en ce que,**
à l'intérieur du(des) corps creux, il est prévu au moins un canal d'écoulement (5).

8. Dispositif selon la revendication 7,
**caractérisé en ce que,**
le canal d'écoulement (5) constitue un espace annulaire.

9. Dispositif selon la revendication 7 ou 8,
**caractérisé en ce que,**
le canal d'écoulement (5) permettant d'apporter et de préchauffer les hydrocarbures est réalisé à l'encontre du sens d'écoulement des produits gazeux provenant de l'étage(des étages) de conversion (2a, 2b) et de l'étage de purification à fond (3).

10. Dispositif selon l'une quelconque des revendications 1 à 9,
**caractérisé en ce que,**
au moins entre l'étage(les étages) de conversion (2a, 2b) et l'étage de reformage à la vapeur et éventuellement aussi entre l'étage de conversion (2b) et l'étage de purification à fond (3), il est prévu un échangeur de chaleur indirect dans lequel est guidée l'eau nécessaire au reformage à la vapeur à contre-courant des produits gazeux provenant de l'étage(des étages) de conversion (2a, 2b) et éventuellement aussi de l'étage de purification à fond (3).

11. Dispositif selon l'une quelconque des revendications 1 à 9,
**caractérisé en ce que,**
l'étage de purification à fond (3) est réalisé au choix sous forme d'un étage sélectif d'oxydation ou d'un étage de méthanisation.

12. Dispositif selon la revendication 11,
**caractérisé en ce que,**
l'étage sélectif d'oxydation est équipé d'une alimentation en air (9) disposée régulièrement sur la circonférence de l'espace annulaire de l'étage de purification à fond (3).

13. Dispositif selon la revendication 12,
**caractérisé en ce que,**
l'alimentation en air (9) est réalisée sous forme d'une conduite annulaire sur laquelle sont réparties des buses de sortie.

14. Dispositif, notamment selon l'une quelconque des revendications 1 à 13,
**caractérisé par**
un boîtier de guidage de flux (10) entourant l'étage(les étages) de conversion (2a, 2b) de l'extérieur pour du réfrigérant servant à refroidir l'étage(les étages) de conversion (2a, 2b), le réfrigérant étant de préférence constitué par de l'eau ou de l'hydrocarbure pouvant être acheminés sous forme de vapeur à l'étage de reformage à la vapeur (3).

15. Dispositif selon la revendication 14,
**caractérisé en ce que,**
le boîtier de guidage de flux (10) comporte des raccordements d'alimentation (13) et d'évacuation (14) pour le réfrigérant et est réalisé de manière à pouvoir être traversé au choix dans le même sens d'écoulement ou à contre-courant du sens d'écoulement dans l'étage(les étages) de conversion (2a, 2b).

16. Dispositif selon la revendication 14 ou 15,
**caractérisé en ce que,**
le boîtier de guidage de flux (10) situé du côté du raccordement d'évacuation est relié hydrauliquement à l'étage de reformage (1) situé du côté entrée du réactif.

17. Dispositif selon l'une quelconque des revendications 14 à 16,
**caractérisé en ce que,**
au choix au niveau des raccordements d'alimentation (13) et/ou d'évacuation (14) du boîtier de guidage de flux (10), il est prévu une soupape de réglage (15) pour le réglage du flux massique du réfrigérant.

18. Dispositif selon l'une quelconque des revendications 1 à 17,
**caractérisé en ce que,**
à l'extrémité aval d'écoulement de l'espace annulaire de l'étage(des étages) de conversion (2a, 2b), est(sont) disposé(s) un(des) capteur(s) de température qui, pour le réglage du flux massique, est(sont) relié(s) par un dispositif de réglage préposé (16) à la soupape de réglage (15).

19. Dispositif selon l'une quelconque des revendications 1 à 18,
**caractérisé en ce que**,
à l'intérieur de l'étage(des étages) de conversion (2a, 2b) en forme de cylindre creux, est disposé un autre canal de réfrigérant (16) où peuvent passer de préférence et au choix de l'eau et/ou les hydrocarbures.
